# EUROPÄISCHE PATENTSCHRIFT

(11) **EP 3 175 942 B1**
(45) Veröffentlichungstag und Bekanntmachung des Hinweises auf die Patenterteilung: **11.04.2018**
(21) Anmeldenummer: 15197275.9
(22) Anmeldetag: 01.12.2015
(51) Int. Cl.: B23B 31/28, B23B 31/175, B23Q 17/00

(54) **SPANNEINRICHTUNG**
CLAMPING DEVICE
DISPOSITIF DE SERRAGE

(43) Veröffentlichungstag der Anmeldung: 07.06.2017
(73) Patentinhaber: MTH GbR Markus und Thomas Hiestand, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 384 839
- EP-A1- 2 548 681
- EP-A1- 2 913 130
- DE-A1-102011 108 002

## Beschreibung

Die Erfindung bezieht sich auf eine Spanneinrichtung gemäss dem Oberbegriff des unabhängigen Anspruchs 1 bzw. unabhängigen Anspruchs 2 insbesondere für Werkzeugmaschinen, die beispielsweise mit einem Kraftspannfutter zur Halterung eines Werkstückes versehen und dessen Spannbacken mittels der Spanneinrichtung über eine axial verstellbare Zugstange als Betätigungsglied verstellbar sind, wobei die Spanneinrichtung, in einem Gehäuse angeordnet, einen umschaltbaren elektrischen Antriebsmotor zum Auslösen von Spannbewegungen, einen Bewegungswandler zur Umsetzung der Verstellbewegungen der Rotorwelle des Antriebsmotors in die zur Betätigung der Spannbacken erforderlichen axialen Verstellbewegungen der Zugstange sowie einen Kraftspeicher zur Aufrechterhaltung der Spannkraft aufweist, der aus mehreren vorgespannten über den Umfang verteilt angeordneten Federpaketen, die an einem als Hohlwelle ausgebildeten und mit einem radial nach außen abstehenden Ansatz versehenen Verstellglied des Bewegungswandlers abgestützt sind, gebildet ist. Eine derartige Spanneinrichtung ist aus dem Dokument EP 2 548 681 A bekannt. Eine Spanneinrichtung dieser Art ist ebenfalls durch die Anmeldung EP 15 150 064 bekannt. Um mittels des Kraftspannfutters sowohl eine Innen- als auch eine Außenspannung vornehmen zu können, sind bei dieser Einrichtung beiderseits eines auf das Verstellglied des Bewegungswandlers einwirkenden Druckstücke jeweils mehrere gleichmäßig über den Umfang verteilt angeordnete, den Kraftspeicher bildende Federpakete angeordnet. Die Federn sind hierbei zwar auf in das Gehäuse eingeschraubte Bolzen geführt und werden wechselseitig durch die Axialverschiebung des Druckstückes gespannt, eine definierte Vorspannung der an dem jeweiligen Spannvorgang nicht beteiligten Federn ist jedoch nicht gegeben. Diese Federn sind vielmehr entlastet und mit axialem Spiel in dem Druckstück eingearbeitete Bohrungen, die aufgrund des gegenüber den Federn größeren Durchmessers zur Führung nicht geeignet sind, gehalten.

Abgesehen davon, dass somit für die beiden Spannrichtungen zwei Kraftspeicher mit einer großen Anzahl von Federpaketen erforderlich sind, ist, bedingt durch das axiale Spiel des jeweils unbelasteten Kraftspeichers, bei Umkehrung der Spannrichtung dieser Freigang zu überwinden, bevor eine Spannkraft aufgebaut werden kann. Der Verstellbereich, der dem Bewegungswandler vorzugeben ist, ist demnach verhältnismäßig groß zu bemessen, auch ist, bevor eine Spannkraft aufgebaut wird, ein Todweg zu überbrücken. Eine zufriedenstellende Betriebsweise ist trotz des erheblichen Bauaufwandes demnach nicht gegeben. Des Weiteren ist von Nachteil, dass eine definierte Mittelstellung des Druckstückes sich nicht bewerkstelligen lässt, da bei einem Spannvorgang erst bei einer Verstellbewegung des Druckstückes, an dem ein Signalring befestigt ist, ein Signal zur Verfügung steht und ausgewertet werden kann.

Aufgabe der Erfindung ist es daher, einen Kraftspeicher zu schaffen, der kein axiales Spiel der Federpakete aufweist und somit eine exakte Ermittlung der Mittelstellung des Druckstückes ermöglicht. Die Verstellbewegung des Druckstückes und damit der Spannkraft soll somit ohne Spiel ermittelt werden können. Dabei soll gewährleistet sein, dass jederzeit eine definierte Vorspannung der Federpakete gegeben ist und somit kurze Federwege, um die Spannkraft aufzubauen, möglich sind. Außerdem sollen die Federn des Kraftspeichers stets in einem ausreichenden Maße geführt und deren Federweg soll entsprechend den Arbeitsvorgängen begrenzbar sein. Die Betriebsweise der Spanneinrichtung soll somit in einem erheblichen Maße gegenüber der bekannten Ausgestaltung verbessert werden.

Gemäß der Erfindung wird dies bei einer Spanneinrichtung der vorgenannten Gattung dadurch erreicht, dass zur Innen- und Außenspannung eines Werkstückes die Federpakete des Kraftspeichers jeweils auf einer Seite des Verstellgliedes des Bewegungswandlers zwischen dem Gehäuse und einem Druckstück eingesetzt sind, dass mit dem Druckstück mehrere Distanzglieder fest verbunden sind, die jeweils eine Anlagescheibe tragen und die Federpakete sowie einen Abstandshalter durchgreifen, dass die Distanzglieder und der Abstandshalter relativ zueinander verstellbar sind und dass der Abstandshalter in axialer Richtung mit Distanzbolzen zusammenwirkt, die durch das Druckstück hindurchgeführt und an der den Federpaketen gegenüberliegenden Wand des Gehäuses abgestützt sind. Diese Spanneinrichtung ist Gegenstand des unabhängigen Anspruchs 1. Bei einer Spanneinrichtung, bei der beiderseits des Verstellgliedes des Bewegungswandlers Federpakete angeordnet sind, wird die vorgenannte Aufgabe dadurch gelöst, dass die Federpakte jeweils zwischen einem Druckstück und Anlagescheiben spiegelbildlich zueinander eingesetzt sind, dass die Anlagescheiben mittels an dem Druckstück befestigter Distanzglieder begrenzt verschiebbar gehalten sind und dass den Anlagescheiben an dem Gehäuse und dem Druckstück vorgesehene Anschläge zugeordnet sind. Diese Spanneinrichtung ist Gegenstand des unabhängigen Anspruchs 2. Zweckmäßig ist bei beiden Ausgestaltungen, die Distanzglieder als abgesetzte Bolzen auszubilden, die mit einem Ende in das Druckstück eingeschraubt sind und mittels eines Bundes an diesem anliegen, und die freien Enden der Distanzglieder als Schraubenkopf zu gestalten, an denen auf der Innenseite eine Anlagefläche für die Anlagescheiben vorgesehen sind. Die Distanzglieder können aber auch jeweils als ein mit einem an dem Druckstück anliegenden Bund versehenes Zwischenstück ausgebildet und mit einem Ende in das Druckstück eingeschraubt sein, wobei an dem freien Ende des Zwischenstückes eine Schraube als Anschlag für die Anlagescheiben eingesetzt ist und der Bund und/oder der verbindende Teil der Distanzstücke als Führung für die Federpakte und/oder die Anlagescheiben ausgebildet ist.
Sehr vorteilhaft ist es, wenn das Druckstück, die Distanzglieder mit Anlagescheiben und Federn sowie der Abstandshalter und die in das Druckstück eingesetzten Distanzbolzen bzw. das Druckstück und die Distanzglieder mit Anlagescheiben und Federn eine vormontierbare Baueinheit bilden, die spielfrei in das Gehäuse einspannbar ist.
Der Abstandshalter sollte im Querschnitt als Winkel- oder T-Stück ausgebildet sein, dessen äußerer Schenkel an der Innenwandung des Gehäuses verschiebbar geführt ist und an dessen die Distanzglieder aufnehmenden Schenkel die Federn des Kraftspeichers abgestützt sind.

Die Anlagescheiben können bei beiden Ausführungsvarianten jeweils in Form einer im Querschnitt T-förmigen Hohlwelle ausgebildet werden, deren röhrenförmiger innerer Teil jeweils ein Distanzglied aufnimmt und der auf der Außenseite mit einem Anschlag für das Distanzglied und auf der Innenseite mit einer mit dem Abstandshalter bzw. dem Drückstück zusammenwirkenden Anschlagfläche versehen ist.

Angebracht ist es ferner, dass in Neutralstellung der Spanneinrichtung durch einen wählbaren Abstand zwischen dem Anschlag des röhrenförmigen Teils der Anlagescheiben und dem Abstandshalter bzw. dem Druckstück die maximale Spannkraft der Federpakete des Kraftspeichers einstellbar ist und den Abstandshalter mit seinem radial abstehenden Schenkel an der Innenwand des Gehäuses verschiebbar zu führen.

Zweckmäßig ist es auch, die Distanzbolzen verschiebbar in dem vorzugsweise zweiteilig ausgebildeten Druckstück zu führen und an der den Federpaketen gegenüberliegenden Seite an dem Gehäuse abzustützen oder an diesem zu befestigen und die die Anlagescheiben tragenden Distanzglieder mit dem Druckstück zu verschrauben und im äußeren Endbereich mit einem als Schraubenkopf ausgebildeten Bund auszustatten, der mit einer an der Anlagescheibe vorgesehenen vzw. eingelassenen Anschlagfläche zusammenwirkt.

Die Federpakte des Kraftspeichers können durch auf den Anlagescheiben angeordnete Tellerfedern oder Schraubendruckfedern gebildet sein, und das vorzugsweise zweiteilig ausgebildete Druckstück sollte über Wälzlager an dem Ansatz des Verstellgliedes des Bewegungswandlers abgestützt werden.

Vorteilhaft ist es des Weiteren, an dem Druckstück und/oder der Zugstange einen Sensor, zum Beispiel in Form eines Signalringes, zur Bestimmung der Spannkraft bzw. der Verstellbewegungen der Zugstange anzubringen.

Wird eine Spanneinrichtung gemäß der Erfindung ausgebildet, so ist es bei beiden Ausführungsvarianten möglich, die Vorspannung der Federpakete exakt einzustellen und diese auch bei einer Entlastung aufrecht zu erhalten. Die Federn weisen somit im entspannten Zustand kein Spiel auf, diese werden vielmehr stets unter einer wählbaren Vorspannung gehalten. Dadurch wird erreicht, dass bei Kraftspannfuttern unmittelbar nach Einleitung eines Spannvorganges Spannkraft aufgebaut wird und diese mittels des Druckstückes auch sofort messbar ist.

Außerdem ist es möglich, mittels der an den Distanzgliedern und den Haltescheiben sowie dem Gehäuse und dem Druckstück vorgesehenen Abschlägen den Federweg der Federn und damit die Spannkraft zu begrenzen und somit zuverlässig eine Überlastung zu vermeiden. Des Weiteren ist die maximale Spannkraft eines Federspeichers leicht wählbar und unter Umständen auch auf unterschiedliche Arbeitsvorgänge einstellbar. Mit geringem Bauaufwand wird somit die Funktionsweise der Spanneinrichtung gegenüber der bekannten Ausgestaltung wesentlich verbessert.

Da die dem Kraftspeicher zugeordneten Bauteile zusammen mit diesem zu einer Baueinheit zusammengefasst werden können, die vormontierbar und als Kassette spielfrei in das Gehäuse einsetzbar ist, ist gewährleistet, dass die Federpakete des Kraftspeichers auch im entlasteten Zustand kein axiales Spiel aufweisen, sondern stets vorgespannt sind. Die Kraft der vorgespannten Federn wird dabei nicht von dem Gehäuse aufgenommen. Und da das Druckstück nach jedem Spannvorgang selbsttätig in eine Mittelstellung zurückgeführt wird, können dessen Verstellbewegungen spielfrei erfasst und mit Hilfe der Maschinensteuerung in entsprechender Weise sofort ausgewertet werden.

In der Zeichnung sind zwei Ausführungsvarianten der gemäß der Erfindung ausgebildeten Spanneinrichtung dargestellt und nachfolgend im Einzelnen erläutert. Hierbei zeigt
- Figur 1 bis 3: die Spanneinrichtung in einem Axialschnitt, mit einem auf einer Seite des Bewegungswandlers angeordneten Kraftspeichers, in unterschiedlichen Betriebsstellungen,
- Figur 4: einen Ausschnitt aus Figur 1, in einer vergrößerten Wiedergabe,
- Figur 5: die Spanneinrichtung nach Figur 1, mit beidseitig des Bewegungswandlers angeordneten Federpaketen als Kraftspeicher und
- Figur 6: einen Teilausschnitt aus Figur 5, in einer vergrößerten Darstellung.

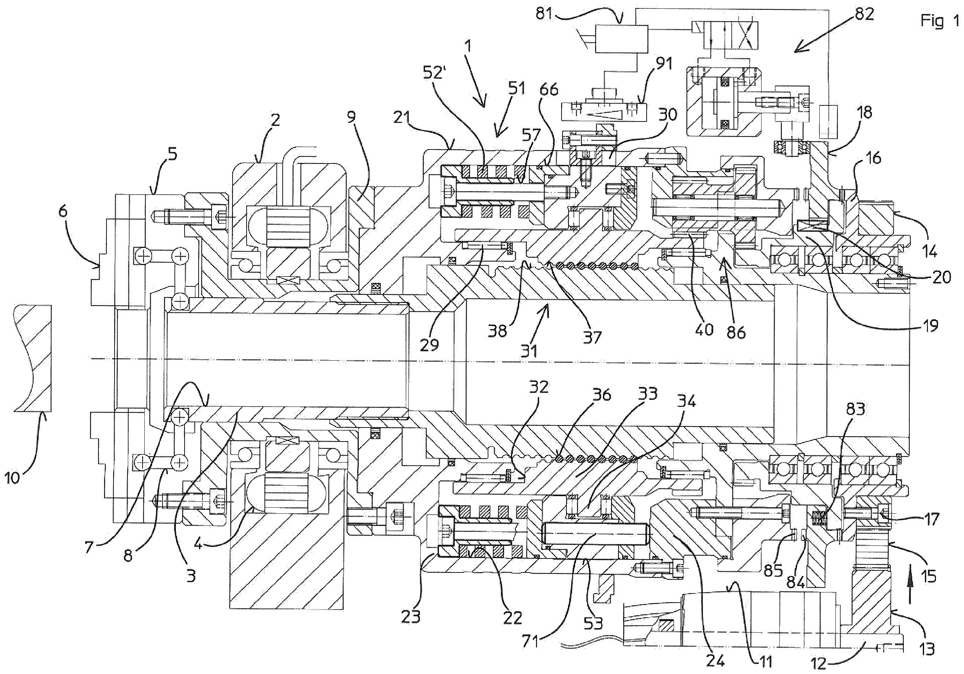

Die in den Figuren 1 bis 3 und 5 dargestellten und jeweils mit 1 bzw. 1' bezeichneten Spanneinrichtungen dienen zur Betätigung eines auf einer Werkzeugmaschine 2 angeordneten Kraftspannfutters 5, mittels dessen radial verstellbarer Spannbacken 6 ein zu bearbeitendes Werkstück 10 bzw. 10' in dem Kraftspannfutter 5 einzuspannen ist. Die Spannbacken 6 des Kraftspannfutters 5 sind hierbei über Umlenkhebel 8 durch eine axial verstellbare Zugstange 7 betätigbar, die mit einem umschaltbaren elektrischen Antriebsmotor 11 über einen Bewegungswandler 31 in Triebverbindung steht. Mittels des Bewegungswandlers 31 werden die rotatorischen Verstellbewegungen des Antriebsmotors 11 in axiale Zustellbewegungen der Zugstange 7 umgewandelt. Auf die Maschinenspindel 3 der Werkzeugmaschine 2 wirkt ein Elektromotor 4 ein, durch den die Werkzeugmaschine 2 antreibbar ist. Mit Hilfe eines Flansches 9 ist die Spanneinrichtung 1 an der Maschinenspindel 3 befestigt.

Um mittels der Spanneinrichtung 1 das Kraftspannfutter 5 betätigen zu können, ist dieser der achsparallel zu der Spanneinrichtung 1 angebaute elektrischeAntriebsmotor 11 zugeordnet, dessen Rotorwelle 12 über eine auf dieser angebrachte Riemenscheibe 13 und einem Zahnriemen 15 mit einer Riemenscheibe 14 in Triebverbindung steht, die über ein an dieser mittels Schrauben 17 befestigten Zahnrad 16 und einer Schiebemuffe 18 mit einem Getriebe 86 verbindbar ist, das der Spanneinrichtung 1 vorgeschaltet ist.

Die Spanneinrichtung 1 besteht im Wesentlichen aus dem in einem Gehäuse 21 angeordneten Bewegungswandler 31 zur Umsetzung der rotatorischen Verstellbewegung der Rotorwelle 12 des Antriebsmotors 11 in die zur Betätigung der Spannbacken 6 des Kraftspannfutters 5 erforderlichen axialen Verstellbewegungen der Zugstange 7 und einem Kraftspeicher 51 zur Aufrechterhaltung der Spannkraft bei stillgesetztem Antriebsmotor 11. Der Bewegungswandler 31, der mittels Wälzlager 29 auf dem Gehäuse 21 abgestützt ist, ist hierbei durch eine Kugelrollspindel 35 gebildet, die aus einem mit gewindegängigen Rillen 37 zur Aufnahme von Kugeln 36 als Wälzkörper ausgestatteten Verstellglied 32 in Form einer Hohlwelle 33 und in die Zugstange 7 eingearbeiteten gegenläufigen Rillen 38 besteht. Über eine Verzahnung 40 ist das Verstellglied 32 mit dem Getriebe 86, das an ein mit der Riemenscheibe 14 kuppelbares Zwischenglied 19 angeschlossen ist, trieblich verbunden.

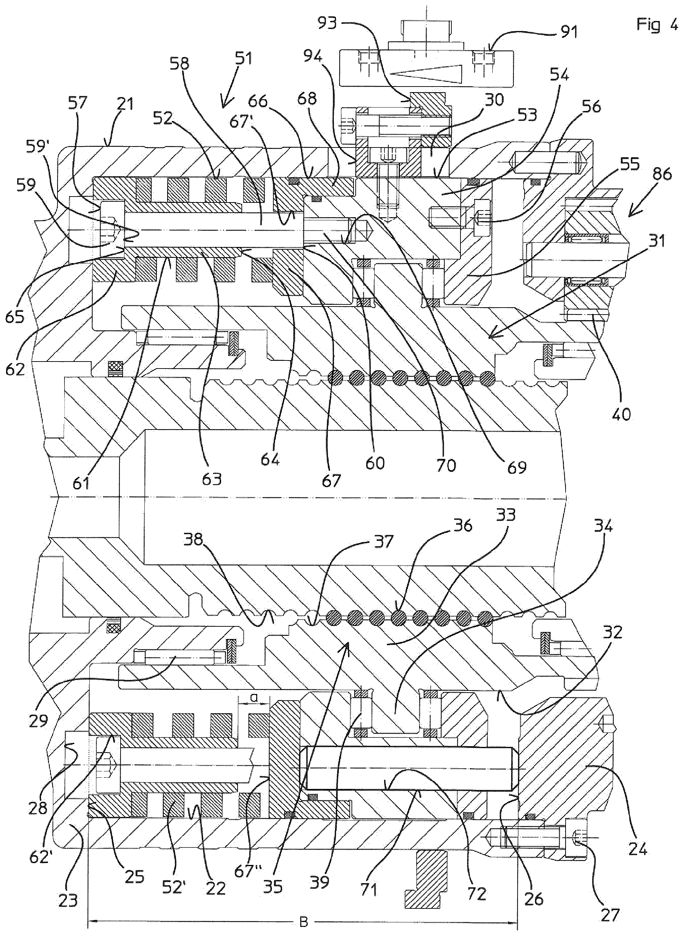

Der Kraftspeicher 51 ist bei dem Ausführungsbeispiel nach den Figuren 1 bis 4, wie dies insbesondere der vergrößerten Darstellung in Figur 4 zu entnehmen ist, mit mehreren gleichmäßig über den Umfang verteilt angeordneten aus Schraubendruckfedern 52' gebildeten Federpakten 52, die jeweils zwischen Anlagescheiben 61 und einem Abstandshalter 66 eingesetzt sind, gebildet. Die Anlagescheiben 61 sind hierbei begrenzt verschiebbar auf Distanzgliedern 57 angeordnet, die in einem Druckstück 53 eingeschraubt sind. Über Wälzlager 39 ist das Druckstück 53 an einem an dem Verstellglied 32 angeformten Ansatz 34 abgestützt, so dass Verstellbewegungen des Verstellgliedes 32 unmittelbar auf das Druckstück 53 übertragen werden. Außerdem sind an dem Köpfen 59 der Distanzglieder 57 Anlageflächen 59' vorgesehen, an denen die Anlagescheiben 61 abgestützt sind.

Die Anlagescheiben 61 sind im Querschnitt T-förmig ausgebildet, so dass deren radial abstehende Schenkel 62 an der Innenwandung 22 des Gehäuses 21 verschiebbar geführt sind, und auf deren rohrförmigen Teile 63 sind die Federn 52' angeordnet. Auf den beiden Stirnseiten sind die Anlagescheiben 61 mit Anschlagflächen 64 und 65 ausgestattet, die einerseits mit dem Abstandshalter 66 und andererseits mit einer an der Stirnwand 23 des Gehäuses 21 vorgesehenen Anschlagfläche 25 zusammenwirken. Außerdem sind die Stege 62 der zylindrischen mit ihren Köpfen 59 eingreifen und mit der Anschlagfläche 65 zusammenwirken. Außerdem sind an den Köpfen 59 der Distanzglieder 57 Anlageflächen 59' vorgesehen, an denen die Anlagescheiben 61 abgestützt sind.

Der Abstandshalter 66 ist im Querschnitt winkelförmig gestaltet, in dessen radial gerichteten Steg 67 Bohrungen 67' zur Aufnahme der Distanzglieder 57 eingearbeitet sind. Der axial abstehende Schenkel 68 liegt dagegen an der Innenwandung 22 des Gehäuses 21 an und wird durch dieses geführt.

Die Distanzglieder 57 sind durch Bolzen 58 gebildet, die an einem Ende mit einem Kopf 59 zur Abstützung an den Anlagescheiben 61 und mit einem Ende mit einem Schraubansatz 70 versehen sind, die in in dem Druckstück 53 vorgesehene Gewindebohrungen 69 eingeschraubt sind. Mittels eines durch einen Absatz gebildeten Bundes 60 liegen die Distanzglieder 57 unverrückbar an dem zweiteiligen, aus einem Ring 54 und einer Scheibe 55 gebildeten und durch Schrauben 56 fest miteinander verbundenen Druckstück 54 an.

Durch einen wählbaren Abstand a - eingezeichnet in Figur 4 - zwischen der Anlagefläche 64 der Anlagescheiben 61 und der Stirnfläche 67" des Steges 67 des Abstandshalters 66 kann die maximale Spannkraft der Schraubendruckfedern 52' der Federpakete 52 vorbestimmt werden. Sobald nämlich die Anlageflächen 64 an dem Abstandshalter 66 anliegen, sind die Schraubendruckfedern 52' und somit der Federspeicher 51 blockiert. Außerdem ist es möglich, den Abstand a an die jeweiligen Gegebenheiten anzupassen, indem zum Beispiel die röhrenförmigen Teile 63 der Anlagescheiben 61 in der Länge verändert werden.

In Figur 1 ist die Spanneinrichtung 1 in Neutralstellung dargestellt, d.h. der Antriebsmotor 11 ist mittels der Schiebemuffe 18 mit dem Bewegungswandler 31 verbunden, und das Kraftspannfutter 5 ist, um dieses in das Werkstück 10 einlegen zu können, geöffnet. Die Federn 52' der Federpakete 52 sind dabei mit einer vorgegebenen Vorspannung zwischen der Anlagescheiben 61 und dem Abstandshalter 66 vorgespannt.

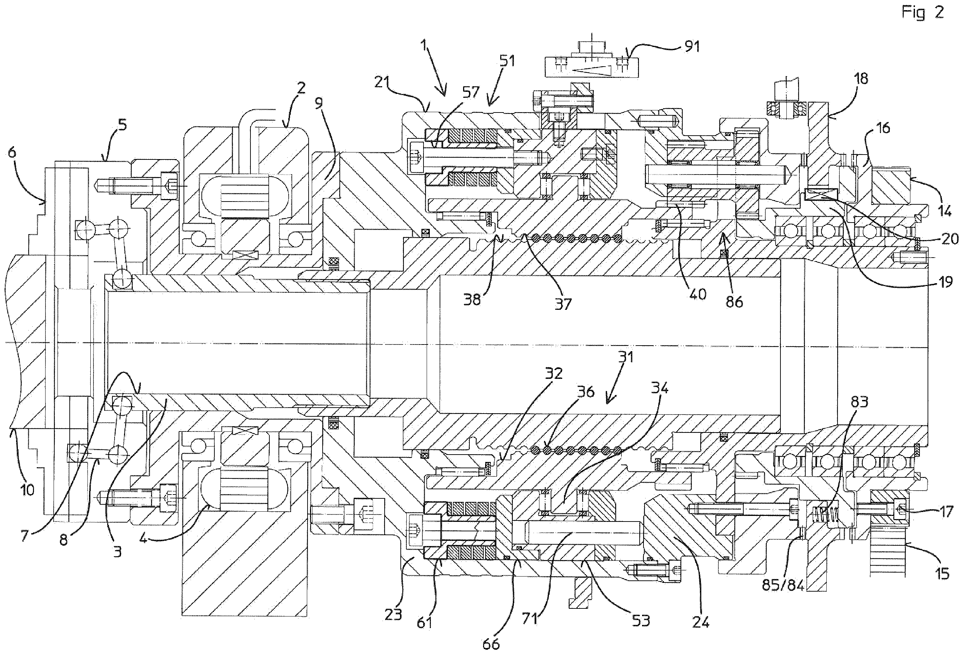

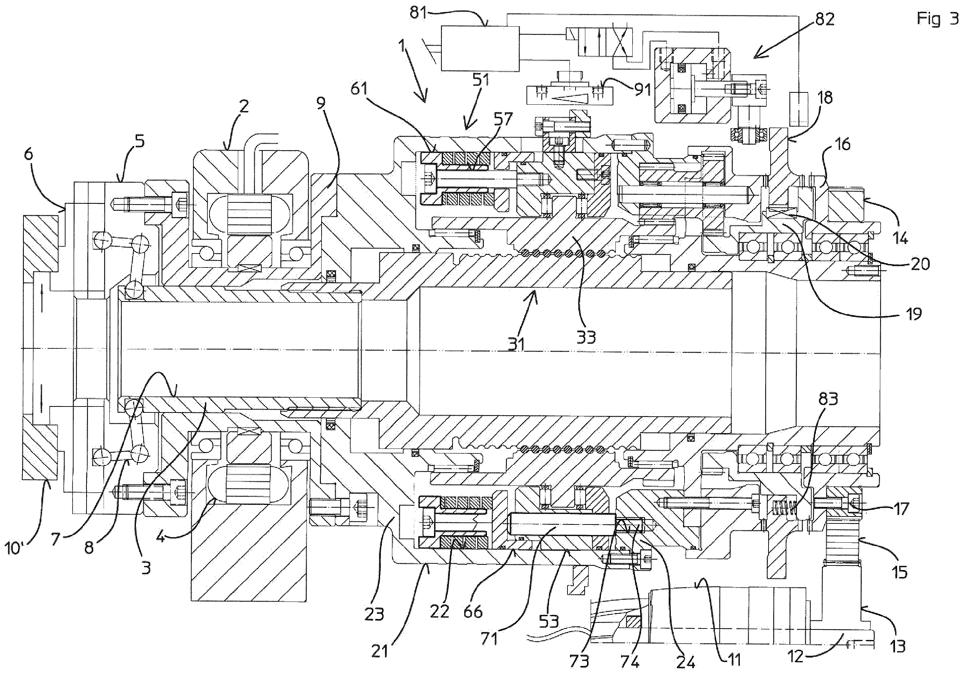

Ist das Werkstück 10 in das Kraftspannfutter 5 eingelegt, wie dies in Figur 2 gezeigt ist und wird dem Verstellglied 32 des Bewegungswandlers 31 von dem Antriebsmotor 11 bei Anlage der Spannbacken 6 an dem Werkstück 10 weiterhin Energie zugeführt, wälzen sich die Kugeln 36 der Kugelrollspindel 35 in den Rillen 38 der ortsfest gehaltenen Zugstange 7 ab, so dass das Verstellglied 32 des Bewegungswandlers nach links bewegt wird. Dadurch werden die Federn 52' der Federpakete 52 zusammengepresst, bis die röhrenförmigen Teile 63 der Anlagescheiben 61 an den Abstandshalter 66 anliegen. Die Köpfe der Distanzglieder 57 greifen in diesem Betriebszustand, wie dies in Figur 3 gezeigt ist, in in die Seitenwand 23 eingearbeitete Ausnehmungen 28 ein. Der Verstellweg wird dabei durch den gewählten vorgegebenen Abstand a zwischen den Anschlagflächen 64 und dem Abstandshalter 66 begrenzt. Ist dieser Betriebszustand erreicht, wird die Triebverbindung zwischen dem Antriebsmotor 11 und dem Bewegungswandler 31 unterbrochen.

Dies wird mittels einer auf die Schiebemuffe 18 einwirkenden hydraulisch oder pneumatisch betätigten Servo-Einrichtung 82 sowie Rückstellfedern 83 bewerkstelligt. Die Servo-Einrichtung 82 wird dazu von einem Steuergerät 81, an das ein Sensor 91 zur Bestimmung der jeweiligen Lage des Druckstückes 53 angeschlossen ist, derart gesteuert, dass die Schiebemuffe 18 in die Ausgangslage zurückgeführt und mittels der Druckfedern 83 selbsttätig nach links verschoben wird, so dass die Schiebemuffe 18 von dem Zahnrad 18 gelöst wird und die an der Schiebemuffe 18 angebrachte weitere Verzahnung 84 in die an dem Gehäuse 21 vorgesehene Verzahnung 85 eingreift. Die Spanneinrichtung 1 ist dadurch, da die Schiebemuffe 18, die in einer an dem Zwischenstück 19 angebrachten Verzahnung 20 verschiebbar gelagert ist, somit mittels des Getriebes 86 verblockt, so dass die Spannkraft des Kraftspeichers 51 aufrechterhalten bleibt.

Soll dagegen, wie dies in Figur 3 gezeigt ist, ein Werkstück 10' innen gespannt werden, so sind die Bewegungsrichtungen mittels des umschaltbaren Antriebsmotors 11 umzukehren. Damit aber auch bei derartigen Spannvorgängen der Kraftspeicher 51 wirksam eingesetzt werden kann und in diesem eine Spannung aufgebaut wird, sind in dem Druckstück 53 in Bohrungen 72 mehrere Distanzbolzen 71 eingesetzt, die mit der rechten Stirnwand 24, die mittels Schrauben 27 mit dem Gehäuse 21 verbunden ist, mit diesem zusammenwirken. Sobald die Distanzbolzen 71 durch eine entsprechende über das Verstellglied 32 des Bewegungswandlers 31 eingeleitete Verstellbewegung nach rechts - diese wird mittels des Bewegungswandlers 31 bei stillgesetzter Zugstange 7 bewerkstelligt - an der Stirnwand 24 anliegen, die als Anschlag 26 für die Distanzbolzen 71 dient, wird die Anlagescheibe 61 an den Distanzbolzen 71 abgestützt, so dass die eingestellte vorgegebene Spannkraft des Kraftspeichers 51 aufgebaut wird. Die Anlagescheiben 61 stützen sich wiederum an dem Abstandshalter 66 ab, der nur auf einer Seite des Druckstückes 53 angeordnete Kraftspeicher 51 ist auf diese Weise sowohl für die Außenspannung als auch für die Innenspannung eines Werkstückes 10 bzw. 10' einsetzbar.

Die Distanzbolzen 71 können aber auch, wie dies in Figur 3 gezeigt ist, mittels eines Schraubansatzes 74, die in die Stirnwand 24 eingearbeitete Gewindebohrungen 73 eingreifen, mit dem Gehäuse 21 fest verbunden sein.

Die Servo-Einrichtung 91, mittels der der jeweilige Stand des Druckstückes 53 zu ermitteln ist, wird durch einen Signalring 93 beeinflusst, der mittels eines Halters 94 an dem Druckstück 53 befestigt ist. Dazu sind in das Gehäuse 21 schlitzartige Ausnehmungen 30 eingearbeitet, in denen die den Signalring 93 tragenden Halter 94 eingesetzt sind.

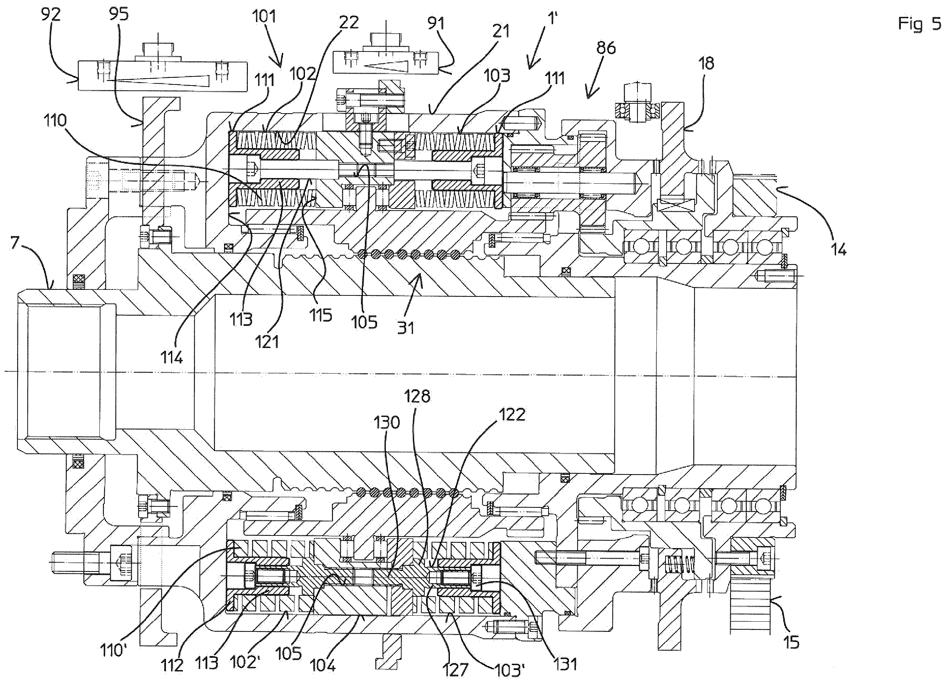

Des Weiteren ist gemäß Figur 5 an der Zugstange 7 ein Signalring 95 befestigt, der mit einem Sensor 92 zur Bestimmung der jeweiligen Lage der Zugstange 7 und somit der Spannbacken 6 des Kraftspannfutters 5 zusammenwirkt.

Das Druckstück 53, die Distanzglieder 57 mit Anlagescheiben 61 und die Federn 52 sowie der Abstandshalter 66 und die in dem Druckstück 53 eingesetzten Distanzbolzen 71 können als Baueinheit B vormontiert und an das vorgegebene Einbaumaß exakt angepasst werden. Die Baueinheit B ist somit spielfrei und passgenau in das Gehäuse 21 einzusetzen, und die Federn 52 weisen demnach auch im entspannten Zustand kein axiales Spiel auf.

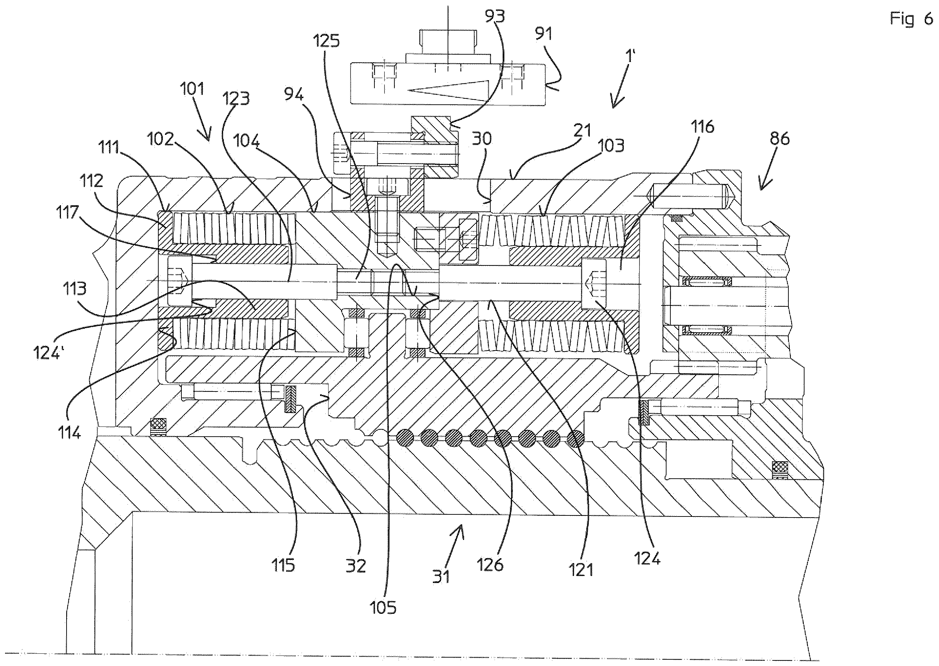

Bei der in den Figuren 5 und 6 gezeigten Ausführungsvarianten der Spanneinrichtung 1' besteht der Kraftspeicher 101 aus beiderseits eines Druckstückes 104 angeordneten Federpaketen 102 und 103 bzw. 102 und 103', die ebenfalls stets vorgespannt sind. Die Federpakete 102 bzw. 102' sind hierbei aus Tellerfedern 110 bzw. Schraubendruckfedern 110' zusammengesetzt.

Die Anlagescheiben 111 sind jeweils auf bolzenartigen Distanzgliedern 121 bzw. 122 gehalten, die in dem Druckstück 104 eingearbeitete Bohrungen 105 eingeschraubt sind. Die im Querschnitt T-förmig ausgebildeten Anlagescheiben 111 sind mit den radial verlaufenden Stegen 112 an der Innenwandung 22 des Gehäuses verschiebbar geführt, die röhrenförmigen Ansätze 113 nehmen dagegen die Distanzglieder 121 bzw. 122 auf und wirken mit an der Stirnwand 23 des Gehäuses 21 und dem Druckstück 104 vorgesehene Anschläge 114 bzw. 115 zusammen.

Die in der oberen Hälfte der Figur 5 und der vergrößerten Darstellung gemäß Figur 6 vorgesehenen Distanzglieder 121 sind als abgesetzte Bolzen 123 gestaltet, deren Köpfe 124 in in den Anlagescheiben 111 vorgesehenen Ausnehmungen 116 eingreifen und die mit ihrem freien Ende als Schraubansatz 125 ausgebildete Enden in die Gewindebohrungen 105 des Druckstückes 104 eingeschraubt sind. Mittels eines Bundes 126 sind die Distanzglieder 121 an dem Druckstück 104 abgestützt, und deren Köpfe 124 liegen im entspannten Zustand der Federpakete 102, 103, wie dies in Figur 6 in der rechten Hälfte dargestellt ist, an einer an den Anlagescheiben 111 vorgesehene Anlagefläche dagegen mit an den Köpfen 124 vorgesehenen Gegenflächen 117 an.

Die Distanzglieder 122 bestehen jeweils aus einem Zwischenstück 127, die mit einem Bund 128 zur Abstützung an dem Druckstück 104 versehen sind, und in die Zwischenstücke 127 eingesetzte Schrauben 131, durch die die Anlagescheiben 111 bei Verstellbewegungen mitgenommen werden. Mittels Schraubansätzen 130 sind die Zwischenstücke 127 in die in dem Druckstück 104 vorgesehene Bohrungen 105 eingeschraubt.

Die Abstützung der beiden Federpakete 102 und 103 bzw. 102' und 103' an den Anlagescheiben 111 sowie dem Druckstück 104 wird mittels der Distanzglieder 121 bzw. 122 gewährleistet, indem auch in dem unbelasteten Kraftspeicher - in Figur 6 in dem Kraftspeicher 103 - stets eine wählbare Vorspannung gegeben ist und die einzelnen Federn 102', 103' somit sicher zwischen den Anlagescheiben 111 und dem Druckstück 104 gehalten sind.
Durch diese Ausgestaltungen wird erreicht, dass die Federn 52'; 102', 103' der Kraftspeicher 51, 101 stets eine wählbare Vorspannung aufweisen und im entspannten Zustand ohne axiales Spiel zwischen den Anlagescheiben 61 bzw. 111 und dem Abstandshalter 66 bzw. dem Druckstück 104 angeordnet sind.

## Patentansprüche

1. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7) als Betätigungsglied verstellbar sind, wobei die Spanneinrichtung (1), in einem Gehäuse (21) angeordnet, einen umschaltbaren elektrischen Antriebsmotor (11) zum Auslösen von Spannbewegungen, einen Bewegungswandler (31) zur Umsetzung der Verstellbewegungen der Rotorwelle (12) des Antriebsmotors (11) in die zur Betätigung der Spannbacken (6) erforderlichen axialen Verstellbewegungen der Zugstange (7) sowie einen Kraftspeicher (51) zur Aufrechterhaltung der Spannkraft aufweist, der aus mehreren vorgespannten über den Umfang verteilt angeordneten Federpaketen (52), die an einem als Hohlwelle (33) ausgebildeten und mit einem radial nach außen abstehenden Ansatz (34) versehenen Verstellglied (32) des Bewegungswandlers (31) abgestützt sind, gebildet ist, **dadurch gekennzeichnet, dass** zur Innen- und Außenspannung eines Werkstückes (10) die Federpakete (52) des Kraftspeichers (51) jeweils auf einer Seite des Verstellgliedes (32) des Bewegungswandlers (31) zwischen dem Gehäuse (21) und einem Druckstück (53) eingesetzt sind, das an dem an dem Verstellglied (32) angeformten Ansatz (34) abgestützt ist, so dass Verstellbewegungen des Verstellgliedes (32) unmittelbar auf das Druckstück (53) übertragen werden, und dass mit dem Druckstück (53) mehrere Distanzglieder (57) fest verbunden sind, die jeweils eine Anlagescheibe (61) tragen und die Federpakete (52) sowie einen Abstandshalter (66) durchgreifen, dass die Distanzglieder (57) und der Abstandshalter (66) relativ zueinander verstellbar sind und dass der Abstandshalter (66) in axialer Richtung mit Distanzbolzen (71) zusammenwirkt, die durch das Druckstück (53) hindurchgeführt und an der den Federpaketen (52) gegenüberliegenden Wand (24) des Gehäuses (21) abgestützt sind.

2. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7) als Betätigungsglied verstellbar sind, wobei die Spanneinrichtung (1), in einem Gehäuse (21) angeordnet, einen umschaltbaren elektrischen Antriebsmotor (11) zum Auslösen von Spannbewegungen, einen Bewegungswandler (31) zur Umsetzung der Verstellbewegungen der Rotorwelle (12) des Antriebsmotors (11) in die zur Betätigung der Spannbacken (6) erforderlichen axialen Verstellbewegungen der Zugstange (7) sowie einen Kraftspeicher (101) zur Aufrechterhaltung der Spannkraft aufweist, der aus mehreren vorgespannten Federpaketen (102, 103), die an einem als Hohlwelle (33) ausgebildeten und mit einem radial nach außen abstehenden Ansatz (34) versehenen Verstellglied (32) des Bewegungswandlers (31) abgestützt sind, gebildet ist, **dadurch gekennzeichnet, dass** bei beiderseits des Verstellgliedes (32) des Bewegungswandlers (31) angeordneten Federpaketen (102, 103) diese jeweils zwischen einem Druckstück (104) und Anlagescheiben (111) spiegelbildlich zueinander eingesetzt sind, das an dem an dem Verstellglied (32) angeformten Ansatz (34) abgestützt ist, so dass Verstellbewegungen des Verstellgliedes (32) unmittelbar auf das Druckstück (53) übertragen werden, und dass die Anlagescheiben (111) mittels an dem Druckstück (104) befestigter Distanzglieder (121; 122) begrenzt verschiebbar gehalten sind und dass den Anlagescheiben (111) an dem Gehäuse (21) und dem Druckstück (104) vorgesehene Anschläge (1 14, 115) zugeordnet sind.

3. Spanneinrichtung nach einem der Ansprüche 1 oder 2, **dadurch gekennzeichnet, dass** die Distanzglieder (57; 121) als abgesetzte Bolzen (58; 123) ausgebildet sind, die mit einem Ende (70; 125) in das Druckstück (53; 104) eingeschraubt und mittels eines Bundes (60; 126) an diesem anliegen, und dass die freien Enden der Distanzglieder (57; 121) als Schraubenkopf (59; 124) ausgebildet sind, an dem auf der Innenseite eine Anlagefläche (59'; 124') für die Anlagescheiben (61; 111) vorgesehen sind.

4. Spanneinrichtung nach Anspruch 2, **dadurch gekennzeichnet, dass** die Distanzglieder (122) jeweils mit einem an dem Druckstück (1 04) anliegenden Bund (128) versehenes Zwischenstück (127) ausgebildet und mit einem Ende (130) in das Druckstück (104) eingeschraubt sind, dass an dem freien Ende des Zwischenstückes (127) eine Schraube (131) als Anschlag für die Anlagescheiben (111) eingesetzt ist und dass der Bund (128) und/oder der verbindende Teil der Distanzstücke (127) als Führung für die Federpakte (102', 103') und/oder die Anlagescheiben (111) ausgebildet ist.

5. Spanneinrichtung nach einem oder mehreren der Ansprüche 1 bis 4, **dadurch gekennzeichnet, dass** das Druckstück (53), die Distanzglieder (57) mit Anlagescheiben (61) und Federn (52) sowie der Abstandshalter (66) und die in das Druckstück (53) eingesetzten Distanzbolzen (71) bzw. das Druckstück (104) und die Distanzglieder (121; 122) mit Anlagescheiben (111) und Federn (102, 103) eine vormontierbare Baueinheit bilden, die spielfrei in das Gehäuse (21) einspannbar ist.

6. Spanneinrichtung nach Anspruch 1, **dadurch gekennzeichnet, dass** die Abstandshalter (66) im Querschnitt als Winkel- oder T-Stücke ausgebildet sind, deren äußere Schenkel (68) an der Innenwandung (22) des Gehäuses (21) verschiebbar geführt sind und an deren die Distanzglieder (61) aufnehmenden Schenkeln (67) die Federn (52) des Kraftspeichers (51) abgestützt sind.

7. Spanneinrichtung nach einem od. mehreren der Ansprüche 1 bis 6, **dadurch gekennzeichnet, dass** die Anlagescheiben (61; 111) in Form einer im Querschnitt T-förmigen Hohlwelle ausgebildet sind, deren röhrenförmiger innerer Teil (63; 113) jeweils ein Distanzglied (57; 121; 122) aufnimmt und der auf der Außenseite mit einem Anschlag (65) für das Distanzglied (57; 121; 122) und auf der inneren Seite mit einer mit dem Abstandsalter (66) bzw. dem Druckstück (104) zusammenwirkenden Anschlagfläche (64) versehen sind.

8. Spanneinrichtung nach einem od. mehreren der Ansprüche 1 bis 7, **dadurch gekennzeichnet, dass** in Neutralstellung der Spanneinrichtung (1) durch einen wählbaren Abstand (a) zwischen dem Anschlag (64) des röhrenförmigen Teils (63) der Anlagescheiben (61) und dem Abstandshalter (66) bzw. dem Druckstück (104) die maximale Spannkraft der Federpakete (52; 102) des Kraftspeichers (51; 101) einstellbar ist.

9. Spanneinrichtung nach Anspruch 7 od. 8, **dadurch gekennzeichnet, dass** die Abstandshalter (66) mit ihrem axial abstehenden Schenkel (68) an der Innenwandung (22) des Gehäuses (21) verschiebbar geführt sind.

10. Spanneinrichtung nach Anspruch 1, **dadurch gekennzeichnet, dass** die Distanzbolzen (71) verschiebbar in dem vorzugsweise zweiteilig ausgebildeten Druckstück (53) geführt und auf der den Federpaketen (52) gegenüberliegenden Seite an dem Gehäuse (21) abgestützt oder an diesem befestigt sind.

11. Spanneinrichtung nach einem od. mehreren der Ansprüche 1 bis 10, **dadurch gekennzeichnet, dass** die die Anlagescheiben (66) tragenden Distanzglieder (57) mit dem Druckstück (53) verschraubt sind und im äußeren Endbereich einen als Schraubenkopf (59) ausgebildeten Bund aufweisen, der mit einer an den Anlagescheiben (61) vorgesehenen vzw. eingelassenen Anschlagfläche (65) zusammenwirkt.

12. Spanneinrichtung nach einem od. mehreren der Ansprüche 1 bis 11, **dadurch gekennzeichnet, dass** die Federpakete (52; 102; 103) des Kraftspeichers (51 ; 101) durch auf den Anlagescheiben (61 ; 111) angeordnete Tellerfedern (52'; 102') oder Schraubendruckfedern (52; 103') gebildet sind.

13. Spanneinrichtung nach einem od. mehreren der Ansprüche 1 bis 12,
**dadurch gekennzeichnet, dass** das vorzugsweise zweiteilig ausgebildete Druckstück (53) über Wälzlager (39) an dem Ansatz (34) des Verstellgliedes (32) des Bewegungswandlers (31) abgestützt ist.

14. Spanneinrichtung nach einem od. mehreren der Ansprüche 1 bis 13,
**dadurch gekennzeichnet, dass** an dem Druckstück (53) und/oder der Zugstange (7) ein Sensor (91 bzw. 92) zum Beispiel in Form eines Signalringes (93 bzw. 95) zur Bestimmung der Spannkraft bzw. der Verstellbewegungen der Zugstange (7) angebracht sind.

## Claims

1. Clamping device (1), in particular for machine tools (2) which for example are provided with a power-operated clamping chuck (5) for holding a workpiece (10) and the clamping jaws (6) of which are adjustable by means of the clamping device (1) through an axially adjustable pull rod (7) serving as actuator, wherein the clamping device (1), arranged in a housing (21), has a reversible electric driving motor (11) for initiating clamping movements, a movement converter (31) for converting the adjusting movements of the rotor shaft (12) of the driving motor (11) into the axial adjusting movements of the pull rod (7) required for actuation of the clamping jaws (6), and an energy storage means (51) for maintaining the clamping force which is formed of a plurality of preloaded spring packs (52) which are arranged distributed over the circumference and supported on an adjusting member (32) of the movement converter (31) embodied in the form of a hollow shaft (33) and provided with a radially outwardly protruding projection (34), **characterised in that** for internal and external clamping of a workpiece (10) the spring packs (52) of the energy storage means (51) are in each case inserted on one side of the adjusting member (32) of the movement converter (31) between the housing (21) and a thrust element (53) which is supported on the projection (34) formed on the adjusting member (32) so that adjusting movements of the adjusting member (32) are transmitted directly to the thrust element (53), and **in that** a plurality of spacing members (57) are connected firmly to the thrust element (53), which spacing members each carry a bearing washer (61) and engage through the spring packs (52) and a spacer (66), **in that** the spacing members (57) and the spacer (66) are adjustable in relation to one another and **in that** the spacer (66) cooperates in the axial direction with spacing pins (71) which are passed through the thrust element (53) and supported on the wall (24) of the housing (21) facing the spring packs (52).

2. Clamping device (1), in particular for machine tools (2) which for example are provided with a power-operated clamping chuck (5) for holding a workpiece (10) and the clamping jaws (6) of which are adjustable by means of the clamping device (1) through an axially adjustable pull rod (7) serving as actuator, wherein the clamping device (1), arranged in a housing (21), has a reversible electric driving motor (11) for initiating clamping movements, a movement converter (31) for converting the adjusting movements of the rotor shaft (12) of the driving motor (11) into the axial adjusting movements of the pull rod (7) required for actuation of the clamping jaws (6), and an energy storage means (101) for maintaining the clamping force which is formed of a plurality of preloaded spring packs (102, 103) which are supported on an adjusting member (32) of the movement converter (31) embodied in the form of a hollow shaft (33) and provided with a radially outwardly protruding projection (34), **characterised in that** with spring packs (102, 103) arranged on both sides of the adjusting member (32) of the movement converter (31) these are in each case inserted in a mirror image of one another between a thrust element (104) and bearing washers (111) which is supported on the projection (34) formed on the adjusting member (32) so that adjusting movements of the adjusting member (32) are transmitted directly to the thrust element (53), and **in that** the bearing washers (111) are held so as to be displaceable to a limited degree by means of spacing members (121; 122) fastened to the thrust element (104) and **in that** the bearing washers (111) have associated stops (114, 115) provided on the housing (21) and the thrust element (104).

3. Clamping device according to one of claims 1 or 2, **characterised in that** the spacing members (57; 121) are embodied in the form of shouldered bolts (58; 123) which at one end (70; 125) are screwed into the thrust element (53; 104) and bear on the latter by means of a collar (60; 126), and **in that** the free ends of the spacing members (57; 121) are embodied in the form of a screw head (59; 124) on the inside of which is provided a bearing face (59'; 124') for the bearing washers (61; 111).

4. Clamping device according to claim 2, **characterised in that** the spacing members (122) are in each case embodied with an intermediate piece (127) provided with a collar (128) bearing on the thrust element (104) and screwed at one end (130) into the thrust element (104), **in that** a screw (131) is inserted at the free end of the intermediate piece (127) as a stop for the bearing washers (111), and **in that** the collar (128) and/or the connecting part of the spacing pieces (127) is embodied as a guide for the spring packs (102', 103') and/or the bearing washers (111).

5. Clamping device according to one or more of claims 1 to 4, **characterised in that** the thrust element (53), the spacing members (57) with bearing washers (61) and springs (52) and the spacer (66) and the spacing pin (71) inserted in the thrust element (53) or the thrust element (104) and the spacing members (121; 122) with bearing washers (111) and springs (102, 103) form a unit which can be preassembled and clamped into the housing (21) free of play.

6. Clamping device according to claim 1, **characterised in that** the spacers (66) are embodied with an angular or T-shaped cross-section, the outer limbs (68) of which are guided displaceably on the internal wall (22) of the housing (21) and the limbs (67) of which receiving the spacing members (61) provide support for the springs (52) of the energy storage means (51).

7. Clamping device according to one or more of claims 1 to 6, **characterised in that** the bearing washers (61; 111) are embodied in the form of a hollow shaft which is T-shaped in cross-section and the tubular inner part (63; 113) of which in each case receives a spacing member (57; 121; 122) and which is provided on the outside with a stop (65) for the spacing member (57; 121; 122) and on the inside with a stop face (64) cooperating with the spacer (66) or the thrust element (104).

8. Clamping device according to one or more of claims 1 to 7, **characterised in that** in the neutral position of the clamping device (1) the maximum clamping force of the spring packs (52; 102) of the energy storage means (51; 101) can be set by a selectable gap (a) between the stop (64) of the tubular part (63) of the bearing washers (61) and the spacer (66) or the thrust element (104).

9. Clamping device according to claim 7 or 8, **characterised in that** the spacers (66) are guided displaceably with their axially protruding limb (68) on the inner wall (22) of the housing (21).

10. Clamping device according to claim 1, **characterised in that** the spacing pins (71) are guided displaceably in the thrust element (53) which is preferably embodied in two parts, and on the opposite side to the spring packs (52) are supported on the housing (21) or fastened to the latter.

11. Clamping device according to one or more of claims 1 to 10, **characterised in that** the spacing members (57) carrying the bearing washers (66) are screwed to the thrust element (53) and in the outer end region have a collar which is embodied in the form of a screw head (59) and cooperates with a stop face (65) which is provided on or recessed in the bearing washers (61).

12. Clamping device according to one or more of claims 1 to 11, **characterised in that** the spring packs (52; 102; 103) of the energy storage means (51; 101) are formed by spring washers (52'; 102') or helical compression springs (52; 103') arranged on the bearing washers (61; 111).

13. Clamping device according to one or more of claims 1 to 12, **characterised in that** the thrust element (53), which is preferably embodied in two parts, is supported by means of roller bearings (39) on the projection (34) of the adjusting member (32) of the movement converter (31).

14. Clamping device according to one or more of claims 1 to 13, **characterised in that** the thrust element (53) and/or the pull rod (7) is fitted with a sensor (91 or 92) for example in the form of a signalling ring (93 or 95) to determine the clamping force or the adjusting movements of the pull rod (7).

## Revendications

1. Dispositif de serrage (1), en particulier pour des machines-outils (2) qui sont pourvues par exemple d'un mandrin (5) pour tenir une pièce (10) et dont les mâchoires de serrage (6) sont réglables à l'aide du dispositif de serrage (1) par l'intermédiaire d'une tige de traction (7) réglable axialement, comme organe d'actionnement, le dispositif de serrage (1) étant disposé dans un carter (21) et comportant un moteur d'entraînement électrique réversible (11) pour déclencher des mouvements de serrage, un convertisseur de mouvement (31) pour transformer les mouvements de réglage de l'arbre de rotor (12) du moteur d'entraînement (11) en mouvements de réglage axiaux-de la tige de traction (7) nécessaires à l'actionnement des mâchoires de serrage (6), ainsi qu'un accumulateur d'énergie (51) destiné à maintenir la force de serrage et composé de plusieurs blocs-ressorts (52) précontraints qui sont répartis sur la circonférence et qui sont en appui contre un organe de réglage (32) du convertisseur de mouvement, conçu comme un arbre creux (33) et pourvu d'un épaulement (34) qui dépasse radialement vers l'extérieur,
**caractérisé en ce que** pour le serrage intérieur et extérieur d'une pièce (10), les blocs-ressorts (52) de l'accumulateur d'énergie (51) sont placés chacun sur un côté de l'organe de réglage (32) du convertisseur de mouvement (31), entre le carter (21) et une pièce de pression (53) qui est en appui contre l'épaulement rapporté sur l'organe de réglage (32), de sorte que les mouvements de réglage de l'organe de réglage (32) sont transmis directement à la pièce de pression (53), et **en ce qu'**il est prévu, reliés solidement à la pièce de pression (53), plusieurs organes d'écartement (57) qui portent chacun une plaque d'application (61) et qui traversent les blocs-ressorts (52) ainsi qu'un élément d'espacement (66), **en ce que** les organes d'écartement (57) et l'élément d'espacement (66) sont réglables les uns par rapport aux autres, et **en ce que** l'élément d'espacement (66) coopère dans le sens axial avec des axes d'écartement (71) qui traversent la pièce de pression (63) et qui sont en appui contre la paroi (24) du carter (21) opposée aux blocs-ressorts (52).

2. Dispositif de serrage (1), en particulier pour des machines-outils (2) qui sont pourvues par exemple d'un mandrin (5) pour tenir une pièce (10) et dont les mâchoires de serrage (6) sont réglables à l'aide du dispositif de serrage (1) par l'intermédiaire d'une tige de traction (7) réglable axialement, comme organe d'actionnement, le dispositif de serrage (1) étant disposé dans un carter (21) et comportant un moteur d'entraînement électrique réversible (11) pour déclencher des mouvements de serrage, un convertisseur de mouvement (31) pour transformer les mouvements de réglage de l'arbre de rotor (12) du moteur d'entraînement (11) en mouvements de réglage axiaux de la tige de traction (7) nécessaires à l'actionnement des mâchoires de serrage (6), ainsi qu'un accumulateur d'énergie (101) destiné à maintenir la force de serrage et composé de plusieurs blocs-ressorts (102, 103) précontraints qui sont répartis sur la circonférence et qui sont en appui contre un organe de réglage (32) du convertisseur de mouvement, conçu comme un arbre creux (33) et pourvu d'un épaulement (34) qui dépasse radialement vers l'extérieur,
**caractérisé en ce que** dans le cas de blocs-ressorts (102, 103) disposés des deux côtés de l'organe de réglage (32) du convertisseur de mouvement (31), ces blocs-ressorts sont placés en miroir entre une pièce de pression (104) et les plaques d'application (111) qui est en appui contre l'épaulement rapporté sur l'organe de réglage (32), de sorte que les mouvements de réglage de l'organe de réglage (32) sont transmis directement à la pièce de pression (53), et **en ce que** les plaques d'application (111) sont fixées avec une mobilité limitée, à l'aide d'organes d'écartement (121 ; 122) fixés à la pièce de pression (104), et **en ce que** des butées (114, 115) prévues sur le carter (21) et sur la pièce de pression (104) sont associées aux plaques d'application (111).

3. Dispositif de serrage selon l'une des revendications 1 ou 2, **caractérisé en ce que** les organes d'écartement (57 ; 121) sont conçus comme des tiges étagées (58 ; 123) qui sont vissées avec une extrémité (70 ; 125) dans la pièce de pression (53 ; 104) et qui sont appliquées contre celle-ci à l'aide d'une collet (60 ; 126), et **en ce que** les extrémités libres des organes d'écartement (57 ; 121) sont conçues comme une tête de vis (59 ; 124) sur laquelle est prévu, sur le côté intérieur, une surface d'application (59' ; 124') pour les plaques d'application (61 ; 111).

4. Dispositif de serrage selon la revendication 2, **caractérisé en ce que** les organes d'écartement (122) sont conçus chacun comme une pièce intermédiaire (127) pourvue d'un collet (128) appliqué contre la pièce de pression (104), et sont vissés avec une extrémité (130) dans ladite pièce de pression (104), **en ce qu'**une vis (131) est placée sur l'extrémité libre de la pièce intermédiaire (127), comme butée pour les plaques d'application (111), et **en ce que** le collet (128) et/ou la partie de liaison des pièces d'écartement (127) sont conçus comme guide pour les blocs-ressorts (102', 103') et/ou les plaques d'application (111).

5. Dispositif de serrage selon l'une au moins des revendications 1 à 4, **caractérisé en ce que** la pièce de pression (53), les organes d'écartement (57) avec les plaques d'application (61) et les ressorts (52), ainsi que l'élément d'espacement (66) et les tiges d'écartement (71) introduites dans la pièce de pression (53) ou la pièce de pression (104) et les organes d'écartement (121 ; 122) avec les plaques d'application (111) et le EP : 15 197 275.9 forment une unité de construction ap
qui est apte à être serrée sans jeu dans le carter (21).

6. Dispositif de serrage selon la revendication 1, **caractérisé en ce que** les éléments d'espacement (66), en coupe transversale, sont conçus comme des pièces coudées ou en T dont les branches extérieures (68) sont guidées mobiles sur la paroi intérieure (22) du carter (21) et dont les branches qui reçoivent les organes d'écartement (61) servent d'appui aux ressorts (52) de l'accumulateur d'énergie (51).

7. Dispositif de serrage selon l'une au moins des revendications 1 à 6, **caractérisé en ce que** les plaques d'application (61 ; 111) ont la forme d'un arbre creux à section transversale en T, dont la partie intérieure tubulaire (63 ; 113) reçoit un organe d'écartement (57 ; 121 ; 122) et qui est pourvu, sur son côté extérieur, d'une butée (65) pour l'organe d'écartement (57 ; 121 ; 122) et, sur son côté intérieur, d'une surface de butée (64) coopérant avec l'élément d'espacement (66) ou la pièce de pression (104).

8. Dispositif de serrage selon l'une au moins des revendications 1 à 7, **caractérisé en ce que** dans la position neutre du dispositif de serrage (1), la force de serrage maximale des blocs-ressorts (52 ; 102) de l'accumulateur d'énergie (61 ; 101) est réglable grâce à un espacement (a) apte à être choisi entre la butée (64) de la partie tubulaire (63) des plaques d'application (61) et l'élément d'espacement (66) ou la pièce de pression (104).

9. Dispositif de serrage selon la revendication 7 ou 8, **caractérisé en ce que** les éléments d'espacement (66) sont guidés mobiles, avec leurs branches (68) qui dépassent axialement, sur la paroi intérieure (22) du carter (21).

10. Dispositif de serrage selon la revendication 1, **caractérisé en ce que** les tiges ( EP : 15 197 275.9 guidées mobiles dans la pièce de p:
préférence en deux parties, et, sur le côté opposé aux blocs-ressorts (52), sont en appui contre le carter (21) ou sont fixées à celui-ci.

11. Dispositif de serrage selon l'une au moins des revendications 1 à 10, **caractérisé en ce que** les organes d'écartement (57) qui portent les plaques d'application (66) sont vissés à la pièce de pression (53) et présentent, dans la zone d'extrémité extérieure, un collet qui est conçu comme une tête de vis (59) et qui coopère avec une surface de butée prévue ou encastrée sur les plaques d'application (61).

12. Dispositif de serrage selon l'une au moins des revendications 1 à 11, **caractérisé en ce que** les blocs-ressorts (52 ; 102 ; 103) de l'accumulateur d'énergie (51 ; 101) sont formés par des ressorts à disques (52' ; 102') ou des ressorts hélicoïdaux (52 ; 103') disposés sur les plaques d'application (61 ; 111).

13. Dispositif de serrage selon l'une au moins des revendications 1 à 12, **caractérisé en ce que** la pièce de pression (53), formée de préférence en deux parties, est en appui par l'intermédiaire de paliers de roulement (39) contre l'épaulement (34) de l'organe de réglage (32) du convertisseur de mouvement (31).

14. Dispositif de serrage selon l'une au moins des revendications 1 à 13, **caractérisé en ce que** sur la pièce de pression (53) et/ou la tige de traction (7) est monté un ressort (91 ou 92), par exemple sous la forme d'anneau de signaux (93 ou 95), pour définir la force de serrage ou les mouvements de réglage de la tige de traction (7).
